Europäisches Patentamt

European Patent Office

Office européen des brevets

(19)

(11) Veröffentlichungsnummer: **0 350 744**

**A2**

(12) **EUROPÄISCHE PATENTANMELDUNG**

(21) Anmeldenummer: 89112079.2

(51) Int. Cl.⁴: **B01D 53/34**

(22) Anmeldetag: 01.07.89

(30) Priorität: 15.07.88 DE 3824066

(43) Veröffentlichungstag der Anmeldung:
17.01.90 Patentblatt 90/03

(84) Benannte Vertragsstaaten:
**BE DE ES FR GB IT NL**

(71) Anmelder: **BAYER AG**

**D-5090 Leverkusen 1 Bayerwerk(DE)**

(72) Erfinder: **Lailach, Günter, Dr.**
**Bismarckstrasse 109**
**D-4150 Krefeld(DE)**
Erfinder: **Gerken, Rudolf, Dr.**
**Rather Strasse 79**
**D-4150 Krefeld(DE)**

(54) Gasreinigungsmassen und Verfahren zu deren Herstellung.

(57) Die vorliegende Erfindung betrifft eine Gasreinigungsmasse zur Entfernung von sauren Komponenten wie Halogenwasserstoffen, Schwefeldioxid, Schwefeltrioxid, Schwefelsäure und/oder Halogenen aus Gasen sowie Verfahren zur Herstellung dieser Gasreinigungsmassen.

EP 0 350 744 A2

## Gasreinigungsmassen und Verfahren zu deren Herstellung

Die Erfindung betrifft eine Gasreinigungsmasse zur Entfernung von sauren Komponenten wie Halogenwasserstoffen, Schwefeldioxid, Schwefeltrioxid, Schwefelsäure und/oder Halogenen aus Gasen sowie Verfahren zur Herstellung dieser Gasreinigungsmassen.

Bekannt sind die Probleme der Entfernung saurer Komponenten aus Abgasen, insbesondere aus Rauchgasen, Abgasen von Kalzinierprozessen, Abgasen aus Chlorierungsprozessen. Dafür wurde eine Vielzahl von Verfahren vorgeschlagen, die meistens auf der Neutralisation der sauren Komponenten mit alkalischen Reagentien, z.B. Natronlauge (DE-C 24 13 358), insbesondere aber Kalk oder Calciumhydroxid (z.B. DE-A 34 15 541, DE-A 32 40 317) beruhen. Dabei verursacht der Verbrauch an alkalischen Reagentien einen wesentlichen Anteil der Betriebskosten. Bekannt ist außerdem das Problem, Metallsulfate schadlos zu beseitigen. Dieses Problem wird häufig dadurch erschwert, daß die Metallsulfate durch Schwefelsäure verunreinigt sind. Ein relativ kostengünstiges Verfahren zur Umwandlung solcher Sulfatgemische in eine deponiefähiges Material wurde in EP-A 132 820 vorgeschlagen. Danach werden Gemische von Metallsulfaten, die 40 bis 70 %ige Schwefelsäure als Feuchte enthalten, mit CaO, Ca(OH)$_2$ und/oder CaCO$_3$, in feuchtem Zustand umgesetzt und das resultierende Produkt durch Kontakt mit Luftsauerstoff in ein deponiefähiges Material überführt.

Ein Problem bei diesem Verfahren liegt darin, daß es schwierig ist, die Calciumverbindungen so genau zu dosieren, daß sowohl die Gesamtmenge der in den Sulfat-Schwefelsäure-Gemischen enthaltenen Sulfationen in Calciumsulfat überführt wird, als auch keine wesentliche Überschußmengen leicht löslicher Calciumverbindungen vorliegen. Die technische Realisierung des Verfahrens erfordert deshalb normalerweise einen mehr oder weniger großen Überschuß der Calciumverbindungen.

Aufgabe dieser Erfindung ist somit die Bereitstellung eines Verfahrens, welches die beschriebenen Nachteile nicht aufweist.

Überraschenderweise wurde nun gefunden, daß sich erdfeuchte Reaktionsprodukte aus der Umsetzung von Metallsulfaten, insbesondere FeSO$_4$, mit CaO, Ca(OH)$_2$ und/oder CaCO$_3$, die einen mehr oder weniger großen Gehalt an CaO, Ca(OH)$_2$ und/oder CaCO$_3$ haben, besonders gut für die Entfernung saurer Bestandteile aus Gasen, wie SO$_2$, SO$_3$, H$_2$SO$_4$, HF, HCl, HBr und HI eignen.

Gegenstand dieser Erfindung ist somit eine Gasreinigungsmasse zur Entfernung saurer Komponenten wie Halogenwasserstoffe, Schwefeldioxid, Schwefeltrioxid, Schwefelsäure und/oder Halogene aus Gasen, wobei die Gasreinigungsmasse im wesentlichen aus Metallhydroxiden, Metalloxidhydraten und/oder Metalloxiden, Gips und 0,1 bis 25 Gew.-% Calciumhydroxid und/oder Calciumcarbonat besteht. Besonders bevorzugt ist eine erfindungsgemäße Gasreinigungsmasse, die 3 bis 30 Gew.-% Eisen(II)-hydroxid und 0,1 bis 5 Gew.-% Calciumhydroxid und/oder Calciumcarbonat enthält.

Die erfindungsgemäßen Gasreinigungsmassen eignen sich auch gut für die Entfernung von F$_2$, Cl$_2$ und Br$_2$ aus Gasen, wobei der Gehalt der nicht als Calciumsulfat vorliegenden Calciumverbindungen vorteilhaft klein ist, vorzugsweise im Bereich von 0,1 bis 5 Gew.-% liegt.

Gegenstand dieser Erfindung sind auch Verfahren zur Herstellung der erfindungsgemäßen Gasreinigungsmassen. Bevorzugt werden die erfindungsgemäßen Gasreinigungsmassen so hergestellt, daß Metallsulfate, die gegebenenfalls freie Schwefelsäure enthalten, mit so viel Calciumoxid und/oder Calciumhydroxid und/oder Calciumcarbonat und gegebenenfalls Wasser gemischt werden, daß das Reaktionsprodukt 0,1 bis 25 Gew.-%, bevorzugt 0,1 bis 5 Gew.-%, der genannten Calciumverbindungen enthält. Die erfindungsgemäßen Gasreinigungsmassen werden dabei durch Reaktion von feuchten Metallsulfaten mit Calciumoxid und/oder Calciumhydroxid hergestellt, wobei in einem Mischer gegebenenfalls so viel Wasser zugegeben wird, daß ein krümeliges, erdfeuchtes Reaktionsprodukt resultiert. Enthalten die Metallsulfate als Feuchte freie Schwefelsäure, so kann diese in einem ersten Reaktionsschritt mit Calciumcarbonat umgesetzt werden. Um eine vollständige Umsetzung der Metallsulfate in Metalloxide/-hydroxide in kurzer Zeit zu erreichen, werden die Calciumverbindungen mit einem Überschuß gegenüber der stöchiometrisch erforderlichen Menge dosiert, so daß die Reaktionsmasse 0,1 bis 25 Gew.-% Calciumhydroxid und/oder -carbonat enthält.

In einer weiteren Ausführungsform des erfindungsgemäßen Verfahrens werden Eisen(II)-sulfat und gegebenenfalls freie Schwefelsäure enthaltende Metallsulfatgemische mit so viel Calciumoxid und/oder Calciumhydroxid und/oder Calciumcarbonat gemischt, daß das Reaktionsprodukt 0,1 bis 5 Gew.-% der genannten Calciumverbindungen enthält. Ebenso ist es möglich, die erfindungsgemäßen Gasreinigungsmassen dadurch herzustellen, daß Eisen(II)-sulfat-heptahydrat mit 100 bis 105 % der stöchiometrisch erforderlichen Menge Calciumoxid gemischt wird.

Erfindungsgemäß eignen sich diese feuchten Reaktionsprodukte hervorragend zur Entfernung von SO$_2$, SO$_3$, H$_2$SO$_4$ und Halogenwasserstoffen

aus Gasen. Insbesondere bei der Reinigung von heißen Rauchgasen oder Abgasen aus Kalzinierprozessen, wie der Titanoxidhydratkalzinierung bei der $TiO_2$-Pigmentherstellung nach dem Sulfatprozeß, werden diese Gasreinigungsmassen gleichzeitig oxidierend behandelt und in ein gut deponierbares Produkt überführt.

Für die Entfernung von Halogenen aus Gasen ist es erforderlich, daß für die Herstellung der erfindungsgemäßen Gasreinigungsmassen Eisen(II)-sulfat oder $FeSO_4$-haltige Sulfatgemische als Rohstoff eingesetzt werden oder anders ausgedrückt, daß die Gasreinigungsmassen Eisen-(II)-Verbindungen enthalten. Das bedingt die Lagerung der Gasreinigungsmassen unter weitgehenden Luftausschluß bis zu deren Verwendung zur Entfernung von Halogenen aus Gasen.

Im folgenden wird die Erfindung beispielhaft erläutert, ohne daß darin eine Einschränkung zu sehen ist.

Beispiel 1
—————

5 kg Eisen(II)-sulfat-Heptahydrates wurden in einem Mischer mit 1,01 kg Calciumoxids intensiv gemischt. Die Mischung erwärmte sich stark und verfärbte sich schmutzig-grau. Es wurden 5,75 kg eines erdfeuchten, krümeligen Produktes ausgetragen.

Die Masse wurde in einem Rohr mit Gas durchströmt, das 0,1 Vol.-% $Cl_2$ enthielt. Erst nachdem 183 $m^3_n$ des Gases durch die Masse geleitet worden waren, konnte im austretendem Gas $Cl_2$ nachgewiesen werden.

Beispiel 2
—————

Filterkuchen aus der Aufarbeitung von Dünnsäure aus einer $TiO_2$-Produktion enthielt 41,8 % $FeSO_4$, 11,6 % $Al_2(SO_4)_3$, 6,5 % $MgSO_4$, 5,5 % $TiOSO_4$, 1,4 % $MnSO_4$, 0,6 % $Cr_2(SO_4)_3$, 0,8 % andere Metallsulfate und 22,6 % $H_2SO_4$, Rest: $H_2O$ (alle Angaben als Gew.-%).

100 kg dieses Filterkuchens wurden mit 58 kg trockenen gelöschten Kalks gemischt. Zu der Mischung wurden 30 l Wasser gesprüht. Die Mischung erhitzte sich so stark, daß Wasser verdampfte. Nach 10 Minuten wurden 173 kg eines rieselfähigen, nicht staubenden schmutzig-grauen Produktes aus dem Mischer entnommen.

Durch das Produkt wurde Abgas aus dem Kalzinierofen der $TiO_2$-Produktionsanlage geleitet, das 5,2 g $SO_2/m^3_n$, 3,1 g $SO_3/m^3_n$ ($SO_3$ und $H_2SO_4$ als $SO_3$ berechnet) und 14 Vol-% Sauerstoff enthielt. Die Temperatur des Gases betrug 260 °C. Nachdem 370 $m^3_n$ des Abgases durch die Masse geleitet werden waren, konnte erstmals $SO_2$ im gereinigten Gas nachgewiesen werden. Nachdem insgesamt 450 $m^3_n$ des Abgases durch die Masse geströmt waren, wurde diese als hellbraunes trockenes Produkt entfernt und zur Deponie gegeben.

Ansprüche

1. Gasreinigungsmasse zur Entfernung saurer Komponenten wie Halogenwasserstoffe, Schwefeldioxid, Schwefeltrioxid, Schwefelsäure und/oder Halogene aus Gasen, dadurch gekennzeichnet, daß diese Gasreinigungsmasse im wesentlichen aus Metallhydroxiden, Metalloxidhydraten und/oder Metalloxiden, Gips und 0,1 bis 25 Gew.-% Calciumhydroxid und/oder Calciumcarbonat besteht.

2. Gasreinigungsmasse gemäß Anspruch 1, dadurch gekennzeichnet, daß die Masse 3 bis 30 Gew.-% Eisen-(II)-hydroxid und 0,1 bis 5 Gew.-% Calciumhydroxid und/oder Calciumcarbonat enthält.

3. Verfahren zur Herstellung der Gasreinigungsmassen gemäß einem der Ansprüche 1 oder 2, dadurch gekennzeichnet, daß Metallsulfate, die gegebenenfalls freie Schwefelsäure enthalten, mit so viel Calciumoxid und/oder Calciumhydroxid und/oder Calciumcarbonat und gegebenenfalls Wasser gemischt werden, daß das Reaktionsprodukt 0,1 bis 25 Gew.-%, bevorzugt 0,1 bis 5 Gew.-%, der genannten Calciumverbindungen enthält.

4. Verfahren zur Herstellung der Gasreinigungsmassen gemäß einem der Ansprüche 1 oder 2, dadurch gekennzeichnet, daß Metallsulfatgemische, die Eisen(II)-sulfat und gegebenenfalls freie Schwefelsäure enthalten, mit so viel Calciumcarbonat und/oder Calciumhydroxid und/oder Calciumcarbonat gemischt werden, daß das Reaktionsprodukt 0,1 bis 5 Gew.-% der genannten Calciumverbindungen enthält.

5. Verfahren zur Herstellung der Gasreinigungsmassen gemäß einem der Ansprüche 1 oder 2, dadurch gekennzeichnet, daß Eisen(II)-sulfat-Heptahydrat mit 100 bis 105 % der stöchiometrisch erforderlichen Menge Calciumoxid gemischt wird.